(19) Europäisches Patentamt
European Patent Office
Office européen des brevets

(11) **EP 1 352 363 B1**

(12) **EUROPÄISCHE PATENTSCHRIFT**

(45) Veröffentlichungstag und Bekanntmachung des Hinweises auf die Patenterteilung:
**10.01.2007 Patentblatt 2007/02**

(21) Anmeldenummer: **01271605.6**

(22) Anmeldetag: **24.10.2001**

(51) Int Cl.:
**G06T 7/00** (2006.01)

(86) Internationale Anmeldenummer:
**PCT/DE2001/004042**

(87) Internationale Veröffentlichungsnummer:
**WO 2002/050770 (27.06.2002 Gazette 2002/26)**

(54) **VERFAHREN UND VORRICHTUNG ZUM KOMPENSIEREN EINER DEJUSTAGE EINER BILDERZEUGUNGSVORRICHTUNG**

METHOD AND DEVICE FOR COMPENSATING FOR THE MALADJUSTMENT OF AN IMAGE PRODUCING DEVICE

PROCEDE ET DISPOSITIF PERMETTANT DE COMPENSER UN DEFAUT D'ALIGNEMENT D'UN DISPOSITIF DE PRODUCTION D'IMAGES

(84) Benannte Vertragsstaaten:
**DE FR GB IT**

(30) Priorität: **21.12.2000 DE 10063756**

(43) Veröffentlichungstag der Anmeldung:
**15.10.2003 Patentblatt 2003/42**

(73) Patentinhaber: **ROBERT BOSCH GMBH 70442 Stuttgart (DE)**

(72) Erfinder: **BOECKER, Jürgen 70499 Stuttgart (DE)**

(56) Entgegenhaltungen:
**EP-A- 0 626 654          GB-A- 2 203 877**
**US-A- 6 084 989**

• **FAUGERAS O.: "Three-dimensional Computer Vision" 1993, MIT PRESS * Seite 245 - Seite 247 ***

## Beschreibung

Die Erfindung betrifft ein Verfahren zum Kompensieren einer Dejustage von zumindest einer ersten Bilderzeugungsvorrichtung, die an einem Trägerobjekt, insbesondere einem Fahrzeug, angeordnet ist. Weiterhin betrifft die Erfindung eine Kompensationsvorrichtung zum Kompensieren einer Dejustage von zumindest einer ersten Bilderzeugungsvorrichtung, die an einem ersten Trägerobjekt, insbesondere einem Fahrzeug, angeordnet ist.

## Stand der Technik

Beispielsweise auf dem Gebiet der Kraftfahrzeugtechnik ist es erwünscht, den Fahrer von möglichst vielen Störeinflüssen zu entlasten und ihn bei der Führung des Fahrzeugs zu unterstützen, so dass nicht nur der Fahrkomfort verbessert, sondern auch die Sicherheit erhöht werden kann. Zu diesem Zweck wurde bereits vorgeschlagen, Systeme zum Erkennen von Fahrbahnrandmarkierungen und zum Erkennen von Objekten auf und neben der Fahrspur einzusetzen. Die Fahrbahnrandmarkierungen beziehungsweise die Objekte werden dabei über Bilderzeugungsvorrichtungen erfasst, die insbesondere durch Videokameras gebildet sein können. In diesem Zusammenhang können Systeme eingesetzt werden, die eine einzige Videokamera umfassen, oder Systeme, die zwei oder mehr Videokameras umfassen. Je nach Art des Systems können über die durch die Bilderzeugungsvorrichtung gewonnenen Informationen beispielsweise aktive Lenk- beziehungsweise Brems- und Antriebseingriffe vorgenommen werden, um den Fahrer zu unterstützen. Auch die Verwirklichung von geeigneten Warnfunktionen ist möglich, wenn durch eine entsprechende Auswertung der über die Bilderzeugungsvorrichtung gewonnen Informationen Gefahrensituationen rechtzeitig festgestellt werden können. Weiterhin sind Systeme denkbar, bei denen die über die Bilderzeugungsvorrichtung gewonnen Informationen beispielsweise für eine kursabhängige Lichtsteuerung oder die Überwachung des rückwärtigen Fahrraums verwendet werden. Unabhängig von der speziellen Ausführungsform des jeweiligen Systems ist es dabei erforderlich, dass genaue Informationen über die Einbauposition der Bilderzeugungsvorrichtung relativ zum Fahrzeug vorliegen. Beispielsweise wenn die Position eines vorausfahrenden Fahrzeugs im Verhältnis zum eigenen Fahrzeug bestimmt werden soll, müssen genaue Informationen über die Ausrichtung des Koordinatensystems der Bilderzeugungsvorrichtung zum Koordinatensystem des eigenen Fahrzeugs vorliegen. Unter Informationen über die Ausrichtung des Koordinatensystems der Bilderzeugungsvorrichtung ist in diesem Zusammenhang beispielsweise die Information darüber zu verstehen, ob die Bilderzeugungsvorrichtung genau in die Fahrtrichtung des Fahrzeugs blickt, oder ob beispielsweise Abweichungen im Bereich von wenigen zehntel Grad oder mehr vorhanden sind. Beim Einbau der Bilderzeugungsvorrichtung oder der Bilderzeugungsvorrichtungen kann über eine Kalibrierung die genaue Einbauposition erfasst werden, die beispielsweise die Höhe über der Strasse, den Querversatz zur Fahrzeugmitte, die Entfernung von der Hinterachse, den Nickwinkel, den Gierwinkel und den Wankwinkel umfassen kann. Solange die jeweilige Einbauposition als konstant angenommen wird, können anhand dieser Daten alle weiteren Berechnungen vorgenommen werden.

Problematisch ist in diesem Zusammenhang, dass die Einbauposition der Bilderzeugungsvorrichtung, bereits aufgrund von kleinsten Verformungen von beispielsweise der Kamerahalterung oder des umliegenden Materials, in der Praxis nicht konstant ist. Bereits kleinste Verformungen der Kamerahalterung beziehungsweise des umliegenden Materials, die beispielsweise durch Temperaturveränderungen oder die Materialalterung hervorgerufen werden können, führen zu signifikanten Verschiebungen und/oder Verdrehungen der Bilderzeugungsvorrichtung oder der Bilderzeugungsvorrichtungen. Derartige Verschiebungen und/oder Verdrehungen werden nachfolgend als Dejustage bezeichnet, wobei sich eine derartige Dejustage beispielsweise nachteilig auf die Ergebnisse der Berechnungen und damit auf die Qualität von Videosystemen auswirkt.

Aus der US 6,084,989 ist ein satellitenbasierendes Bilderzeugungssystem bekannt, das zum Auffinden von Landmarken geeignet ist. Die GB 2 203 877 A offenbart ein Verfahren zur Parametrisierung von Formen in Bildern. Aus der europäischen Patentanmeldung EP 0 626 654 A2 ist eine Vorrichtung zur Messung des Abstandes von zwei Kraftfahrzeugen mittels stereobildverarbeitung bekannt. Faugeras O.: "Three-dimensional Computer Vision", 1993, MIT PRESS, beschreibt in Kapitel 7 die Bestimmung der Eigenbewegung einer Kamera.

## Vorteile der Erfindung

Dadurch, dass das erfindungsgemäße Verfahren die Schritte gemäß Anspruch 1 umfasst, kann eine eventuelle Dejustage selbstständig und zuverlässig erkannt und kompensiert werden, ohne dass separate Kalibriereinrichtungen erforderlich sind. Bei Fahrzeugen können dadurch beispielsweise Werkstattaufenthalte vermieden werden. Um eine ständige Überwachung und Kompensation zu gewährleisten, wird das erfindungsgemäße Verfahren vorzugsweise zyklisch während des Betriebs durchgeführt. Da es sich jedoch bei der zu überwachenden Dejustage um ein Langzeitproblem handelt, ist eine relativ niedrige Überwachungsfrequenz ausreichend. Im Zusammenhang mit der Kraftfahrzeugtechnik ist es daher beispielsweise möglich, dass die zur Durchführung des erfindungsgemäßen Verfahrens erforderliche Rechenleistung von ohnehin im Fahrzeug vorhandenen Hardwarekomponenten zur Verfügung gestellt wird. Gegebenenfalls können zusätzliche Speicherkapazitäten vorgesehen werden, um das erste Bild und/oder das zweite Bild zu speichern.

Bei einer ersten Ausführungsform des erfindungsgemäßen Verfahrens ist vorgesehen, dass das Erfassen von ersten Aufpunkten und ersten Winkeln von ersten Kanten und/oder ersten Linien in dem ersten Bild die folgenden Teilschritte in der genannten Reihenfolge umfasst: Anwenden eines Kanten- und/oder Linienextraktionsverfahrens; Anwenden eines Binearisierungsverfahrens; Durchführen einer Bildinvertierung; Anwenden eines Kanten- und/oder Liniendetektionsverfahrens; und Bestimmen der ersten Aufpunkte und der ersten Winkel. Dem Fachmann auf dem Gebiet der digitalen Bildverarbeitung sind verschiedene Verfahren zur Durchführung der genannten Teilschritte bekannt, und prinzipiell können alle geeigneten Verfahren eingesetzt werden, so lange sie die Bestimmung der ersten Aufpunkte und der ersten Winkel ermöglichen.

Bei einer zweiten Ausführungsform des erfindungsgemäßen Verfahrens ist vorgesehen, dass das Erfassen von ersten Aufpunkten und ersten Winkeln von ersten Kanten und/oder ersten Linien in dem ersten Bild die folgenden Teilschritte in der genannten Reihenfolgen umfasst: Anwenden eines Binearisierungsverfahrens; Anwenden eines Kanten- und/oder Linienextraktionsverfahrens; Durchführen einer Invertierung; Anwenden eines Kanten- und/oder Liniendetektionsverfahrens; und Bestimmen der ersten Aufpunkte und der ersten Winkel. Bezüglich der zweiten Ausführungsform des erfindungsgemäßen Verfahrens wird auf die Ausführungen zur ersten Ausführungsform des erfindungsgemäßen Verfahrens verwiesen, die sinngemäß gelten. Weiterhin werden die Ergebnisse der ersten und der zweiten Ausführungsform des erfindungsgemäßen Verfahrens später im Abschnitt "Beschreibung der Ausführungsbeispiele" gegenübergestellt.

Bei dem Ausführungsbeispiel mit der ersten und zweiten Bilderzeugungsvorrichtung, das nachfolgend beschrieben ist, handelt es sich nicht um eine Ausführungsform der Erfindung, sondern um ein Beispiel, das das Verständnis der Erfindung erleichtert.

Bei dem Verfahren kann weiterhin vorgesehen sein, dass die zweiten Aufpunkte und die zweiten Winkel zweite Kanten und/oder zweite Linien festlegen, die in dem zweiten Bild gefunden werden, und dass das zweite Bild von einer zweiten Bilderzeugungsvorrichtung erzeugt wird, die ebenfalls an dem Trägerobjekt angeordnet ist, beispielsweise an einem Fahrzeug. Wenn die erste Bilderzeugungsvorrichtung und die zweite Bilderzeugungsvorrichtung jeweils durch eine Videokamera gebildet sind, die prinzipiell die gleiche Blickrichtung aufweisen, jedoch mit einem Abstand zueinander angeordnet sind (Stereokameras), kann auf diese Weise eine eventuelle Dejustage zwischen den beiden Kameras erkannt und kompensiert werden.

Insbesondere zu diesem Zweck ist bei dem Verfahren vorzugsweise vorgesehen, dass die zweiten Aufpunkte und die zweiten Winkel wie die ersten Aufpunkte und die ersten Winkel bestimmt werden. In diesem Zusammenhang ist es beispielsweise möglich, dass entsprechenden Softwareprozeduren nacheinander die Bilddaten des ersten Bildes und die Bilddaten des zweiten Bildes zugeführt werden.

Um eine eventuelle Dejustage zwischen der ersten Bilderzeugungsvorrichtung und einer zweiten Bilderzeugungsvorrichtung beziehungsweise einer ersten Kamera und einer zweiten Kamera mit Hilfe der Korrekturparameter kompensieren zu können, werden beim Verfahrensschritt d) auch dann Korrekturparameter aus den ersten Aufpunkten und den ersten Winkeln und den zweiten Aufpunkten und den zweiten Winkeln bestimmt, wenn eine Dejustage der zweiten Bilderzeugungsvorrichtung vorliegt.

Obwohl prinzipiell auch andere Bilderzeugungsvorrichtungen eingesetzt werden können, wird für das Verfahren bevorzugt, dass die erste Bilderzeugungsvorrichtung und/oder die zweite Bilderzeugungsvorrichtung jeweils durch eine Videokamera gebildet sind, wie dies bereits erwähnt wurde.

Um eine eventuelle Dejustage zwischen zwei Bildverarbeitungsvorrichtungen erkennen und gegebenenfalls kompensieren zu können, wird bei dem Verfahren bevorzugt, dass die erste Bilderzeugungsvorrichtung und die zweite Bilderzeugungsvorrichtung eine Stereo-Videokamera bilden, und dass das erste Bild und das zweite Bild gleichzeitig erzeugt wird. Diese Vorgehensweise ergibt eine hohe Unempfindlichkeit gegenüber Störungen des ersten und/oder des zweiten Bildes, die beispielsweise durch Erschütterungen, Regentropfen, Spritzwasser, beschlagene oder verunreinigte Scheiben und dergleichen hervorgerufen werden, da hinsichtlich des ersten Bildes und des zweiten Bildes eine Merkmalsextraktion durchgeführt wird. Das heißt, dass wenn aufgrund der erwähnten Störungen kein Pixel des ersten Bildes in dem zweiten Bild wiederzufinden ist, dennoch zuverlässige Ergebnisse erzielt werden.

Unabhängig davon, ob eine Bilderzeugungsvorrichtung vorgesehen ist oder ob zwei oder mehrere Bilderzeugungsvorrichtungen vorgesehen sind, wird bevorzugt, dass das erfindungsgemäße Verfahren (auch) derart durchgeführt wird, dass das zweite Bild ein zu einem früheren Zeitpunkt von der ersten Bilderzeugungsvorrichtung erzeugtes Bild ist, und dass die ersten Kanten und/oder die ersten Linien und die zweiten Kanten und/oder die zweiten Linien Kanten und/oder Linien des Trägerobjekt umfassen. Diese Vorgehensweise dient dazu, jede einzelne Bilderzeugungsvorrichtung hinsichtlich des Trägerobjekts auf eine eventuelle Dejustage zu überwachen und gegebenenfalls zu kompensieren. Wenn das Trägerobjekt ein Kraftfahrzeug ist und die Blickrichtung der Bilderzeugungsvorrichtung in Fahrtrichtung verläuft, können die Kanten und/oder Linien des Fahrzeugs beispielsweise die Vorderkante der Motorhaube umfassen. In diesem Zusammenhang kann es vorteilhaft sein, wenn zusätzlich oder alternativ nach feststehenden Formen, beispielsweise der Form der Motorhaube gesucht wird. Anstelle von für Kanten verwendeten Geradengleichungen kann dann eine Gleichung oder ein Parametersatz für die Kontur der feststehenden Form, beispielsweise der Motorhaube, verwendet werden.

Bei dem erfindungsgemäße Verfahren kann vorgesehen sein, dass bei dem Kanten- und/oder Linienextraktionsverfahren eine Sobeloperator-Filterung eingesetzt wird. Die dem Fachmann an sich bekannte Sobeloperator-Filterung ergibt, dass sich die in dem Bild enthaltenen Kanten und Linien als helle Linien auf dunklem Hintergrund abzeichnen.

Ebenso kann bei dem erfindungsgemäßen Verfahren vorgesehen sein, dass bei den Kanten- und/oder Linienextraktionsverfahren eine Roberts-Edge-Filterung eingesetzt wird. Mit dieser dem Fachmann ebenfalls an sich bekannten Roberts-Edge-Filterung werden ähnlich Ergebnisse wie bei der Sobeloperator-Filterung erzielt.

Als Binearisierungsverfahren kann beispielsweise ein Schwellenwertverfahren eingesetzt werden. Wenn das entsprechende Bild in Form von Grauwerten vorliegt, können beispielsweise die Häufigkeiten der einzelnen Grauwerte zur Bestimmung des durchschnittlichen Grauwerts ausgewertet werden, wobei dieser durchschnittliche Grauwert dann den Schwellenwert bilden kann.

Ebenso kann bei dem erfindungsgemäßen Verfahren vorgesehen sein, dass bei dem Binearisierungsverfahren, bezüglich einem Grauwerthistogramm des ersten Bildes und des zweiten Bildes, die Minima zwischen zwei jeweiligen Maxima erfasst werden. Diese Vorgehensweise bietet sich an, weil die zu untersuchenden Bilder systembedingt eine sehr ähnliche Charakteristik aufweisen und ihr jeweiliges Grauwerthistogramm einer bimodalen Verteilung entspricht.

Das erfindungsgemäß Verfahren sieht vorzugsweise weiterhin vor, dass bei dem Kanten- und/oder Liniendetektionsverfahren eine Hough-Transformation eingesetzt wird. Durch die Hough-Transformation wird die genaue Position und Lage aller signifikanten Kanten und/oder Linien in den Bildern bestimmt. Durch die Transformation der in kartesischen Koordinaten gegebenen Kantenpunkte $[x_i, y_i]$ in einen zweidimensionalen Parameterraum $[a, \varphi]$, über die Transformationsgleichung:

$$x_i \cdot \cos(\varphi) + y_i \cdot \sin(\varphi) = a,$$

wird durch einfache Suche lokaler Maxima im Parameterraum eine Bestimmung von kolinearen Punkten im zu untersuchenden Bild möglich. Durch die entsprechende Rücktransformation erhält man sowohl Aufpunkte als auch Winkel der Ursprungslotrechten auf jede signifikante Kante beziehungsweise Linie im Ursprungsbild.

Dadurch, dass die erfindungsgemäße Kompensationsvorrichtung die Merkmale gemäß Anspruch 13 aufweist, ergeben sich ähnliche Vorteile wie bei dem erfindungsgemäßen Verfahren. Das heißt insbesondere, dass eine eventuelle Dejustage selbstständig und zuverlässig erkannt und kompensiert werden kann, ohne dass separate Kalibriereinrichtungen erforderlich sind. Sofern die Trägerobjekte durch Fahrzeuge gebildet sind, können dadurch beispielsweise Werkstattaufenthalte vermieden werden. Im Übrigen wird auf die entsprechenden Ausführungen zum erfindungsgemäßen Verfahren verwiesen.

Bei der erfindungsgemäßen Vorrichtung ist vorzugsweise vorgesehen, dass die Aufpunkt- und Winkelerfassungsmittel Kanten- und/oder Linienextraktionsmittel, Binearisierungsmittel und Invertierungsmittel aufweisen. Ebenso wie alle anderen hier erwähnten Mittel können auch diese Mittel durch geeignete Hard- und Software verwirklicht werden. Beispielsweise im Bereich der Fahrzeugtechnik kann in vielen Fällen ohnehin vorhandene Hardware zumindest teilweise verwendet werden, so dass sich die Gesamtkosten im Rahmen halten. Ähnlich wie bei dem Verfahren kann auch bei der Vorrichtung vorgesehen sein, dass die zweiten Aufpunkte und die zweiten Winkel zweite Kanten und/oder zweite Linien festlegen, die in dem zweiten Bild gefunden werden, und dass das zweite Bild von einer zweiten Bilderzeugungsvorrichtung erzeugt wird, die ebenfalls an dem Trägerobjekt angeordnet ist, insbesondere an einem Fahrzeug. Diese Vorgehensweise dient dazu, eine eventuelle gegenseitige Dejustage der ersten Bilderzeugungsvorrichtung und der zweiten Bilderzeugungsvorrichtung zu erkennen und gegebenenfalls zu kompensieren. Dadurch wird jedoch nicht ausgeschlossen, dass für jede vorhandene Bilderzeugungsvorrichtung als zweites Bild auch ein von der entsprechenden Bilderzeugungsvorrichtung früher erzeugtes Bild verwendet wird, um eine eventuelle Dejustage der entsprechenden Bilderzeugungsvorrichtung bezüglich dem Trägerobjekt zu erkennen und gegebenenfalls zu kompensieren. Um den erforderlichen Hardwareaufwand so gering wie möglich zu halten, bietet es sich an, eine eventuelle gegenseitige Dejustierung der ersten Bilderzeugungsvorrichtung und der zweiten Bilderzeugungsvorrichtung zu einem anderen Zeitpunkt zu überwachen, als eine Dejustierung hinsichtlich der einzelnen Bilderzeugungsvorrichtungen und dem Trägerobjekt.

Mit der Vorrichtung werden die zweiten Aufpunkte und die zweiten Winkel vorzugsweise nach dem gleichen Prinzip wie die ersten Aufpunkte und die ersten Winkel bestimmt. Durch diese Maßnahme kann der erforderliche Hard- und Softwareaufwand weiterhin eingeschränkt werden.

Bei der Vorrichtung kann weiterhin vorgesehen sein, dass die Korrekturparameter Bestimmungsmittel aus den ersten Aufpunkten und den ersten Winkeln und den zweiten Aufpunkten und den zweiten Winkeln auch dann Korrekturparameter bestimmen, wenn eine Dejustage der zweiten Bilderzeugungsvorrichtung vorliegt, um diese Dejustage mit Hilfe der Korrekturparameter gegebenenfalls zu kompensieren. In diesem Zusammenhang kann eine Mittelwertbildung über alle Verschiebungswerte durchgeführt werden. Dadurch lässt sich auf eine eventuell abweichende Ausrichtung der ersten Bilderzeugungsvorrichtung und der zweiten Bilderzeugungsvorrichtung rückschließen. Bestimmen lässt sich sowohl eine Veränderung durch Rotation als auch durch Translation. Die erwähnte Mittelwertbildung hat weiterhin den Vorteil, dass Messfehler und Messungenauigkeiten, die beispielsweise durch Kamerarauschen verursacht werden können, weitestgehend eliminiert werden. Das Gütemaß der Messung ergibt sich in diesem Fall über die Standartabweichung der Dejustagewerte. Die eigentliche Kompensation im Falle einer Dejustage kann beispielsweise durch das Abspeichern neuer, relativer Koordinaten zwischen der ersten Bilderzeugungsvorrichtung und der zweiten Bilderzeugungsvorrichtung erfolgen. Weichen die neu errechneten Differenzwerte beziehungsweise die Mittelungen über mehrere Messungen, von den zuvor gespeicherten ab, so können die neu errechneten Werte als neue Referenzwerte abgespeichert werden, wodurch sich die erwünschte Kompensation ergibt.

Ähnlich wie bei dem Verfahren ist die erste Bilderzeugungsvorrichtung und/oder die zweite Bilderzeugungsvorrichtung vorzugsweise jeweils durch eine Videokamera gebildet, insbesondere eine Graustufenkamera. Um eine eventuelle gegenseitige Dejustage der ersten Bilderzeugungsvorrichtung und der zweiten Bilderzeugungsvorrichtung zu erkennen und gegebenenfalls zu kompensieren, wird für die Vorrichtung bevorzugt, insbesondere wenn die erste Bilderzeugungsvorrichtung und die zweite Bilderzeugungsvorrichtung eine Stereo-Videokamera bilden, dass das erste Bild und das zweite Bild gleichzeitig erzeugt wird.

Alternativ oder zusätzlich kann die erfindungsgemäße Vorrichtung derart ausgestaltet sein, dass das zweite Bild ein zu einem früheren Zeitpunkt von der ersten Bilderzeugungsvorrichtung erzeugtes Bild ist, und dass die zweiten Kanten und/oder die zweiten Linien Kanten und/oder Linien des Trägerobjekts umfassen. In diesem Zusammenhang wird darauf hingewiesen, dass, wenn mehrere Bilderzeugungsvorrichtungen vorhanden sind, zur Überwachung einer eventuellen Dejustage bezüglich einer einzelnen Bilderzeugungsvorrichtung und dem Trägerobjekt, jede gerade überwachte Bilderzeugungsvorrichtung als erste Bilderzeugungsvorrichtung aufzufassen ist.

Die bei der erfindungsgemäße Vorrichtung vorgesehenen Kanten- und/oder Linienextraktionsmittel können eine Sobeloperator-Filterung durchführen, wobei auf die entsprechenden Ausführungen im Zusammenhang mit dem erfindungsgemäßen Verfahren verwiesen wird.

Gleiches gilt für den Fall, dass die Kanten- und/oder Linienextraktionsmittel eine Roberts-Edge-Filterung durchführen.

Binearisierungsmittel können Schwellenwertvergleiche durchführen, wie dies im Zusammenhang mit dem erfindungsgemäßen Verfahren bereits erläutert wurde.

Analog zum erfindungsgemäßen Verfahren können die Binearisierungsmittel, bezüglich einem Grauwerthistogramm des ersten Bildes und des zweiten Bildes, auch die Minima zwischen zwei jeweiligen Maximal erfassen.

Bei der erfindungsgemäßen Vorrichtung kann weiterhin vorgesehen sein, dass die Kanten- und/oder Liniendetektionsmittel eine Hough-Transformation durchführen, wobei auch diesbezüglich auf die entsprechenden Ausführungen im Zusammenhang mit dem erfindungsgemäßen Verfahren verwiesen wird.

## Zeichnungen

Es zeigen:

Figur 1     ein von einer ersten Bilderzeugungsvorrichtung erzeugtes erstes Bild;

Figur 2     eine von einer zweiten Bilderzeugungsvorrichtung erzeugtes zweites Bild;

Figur 3     das Bild von Figur 1 nach einer Kanten- und Linienextraktion durch eine Sobeloperator-Filterung;

Figur 4     das Bild von Figur 2 nach einer Kanten- und Linienextraktion durch eine Sobeloperator-Filterung;

Figur 5     das Bild von Figur 3 nach einer Binearisierung durch Schwellenwertvergleich und anschließender Invertierung;

Figur 6     das Bild von Figur 4 nach einer Binearisierung durch Schwellenwertvergleich und anschließender Invertierung;

Figur 7     eine typische Grauwertverteilung eines ersten beziehungsweise zweiten Bildes mit eingezeichnetem Schwellenwert;

Figur 8     das Bild von Figur 1 nach einer Binearisierung;

Figur 9     das Bild von Figur 2 nach einer Binearisierung;

Figur 10    das Bild von Figur 8 nach einer Kanten- und Linienextraktion durch Roberts-Edge-Filterung und anschließender Invertierung;

Figur 11    das Bild von Figur 9 nach einer Kanten- und Linienextraktion durch Roberts-Edge-Filterung und anschließender Invertierung;

Figur 12 die Lage von erfassten Kanten beziehungsweise Linien für das Bild von Figur 1;

Figur 13 ein Beispiel für die Beschreibung von Aufpunkten einer einzelnen Linie; und

Figur 14 den Bildbereich nach einer Transformation in einem zweidimensionalen Parameterraum.

## Beschreibung der Ausführungsbeispiele

Zunächst wird eine Ausführungsform des Verfahrens erläutert, mit dem eine gegenseitige Dejustage von einer ersten Bilderzeugungsvorrichtung und einer zweiten Bilderzeugungsvorrichtung erkannt.und gegebenenfalls kompensiert werden kann.

Bei dieser Ausführungsform ist die erste Bilderzeugungsvorrichtung durch eine erste Videokamera gebildet, und die zweite Bilderzeugungsvorrichtung ist durch eine zweite Videokamera gebildet. Die erste Videokamera und die zweite Videokamera bilden gemeinsam eine Stereo-Videokamera. Die erste Videokamera ist auf der linken Fahrzeughälfte im Bereich der Windschutzscheibe angeordnet, während die zweite Videokamera auf der rechten Fahrzeughälfte im Bereich der Windschutzscheibe angeordnet ist. Die Blickrichtung der ersten und der zweiten Videokamera erstreckt sich dabei in Fahrtrichtung.

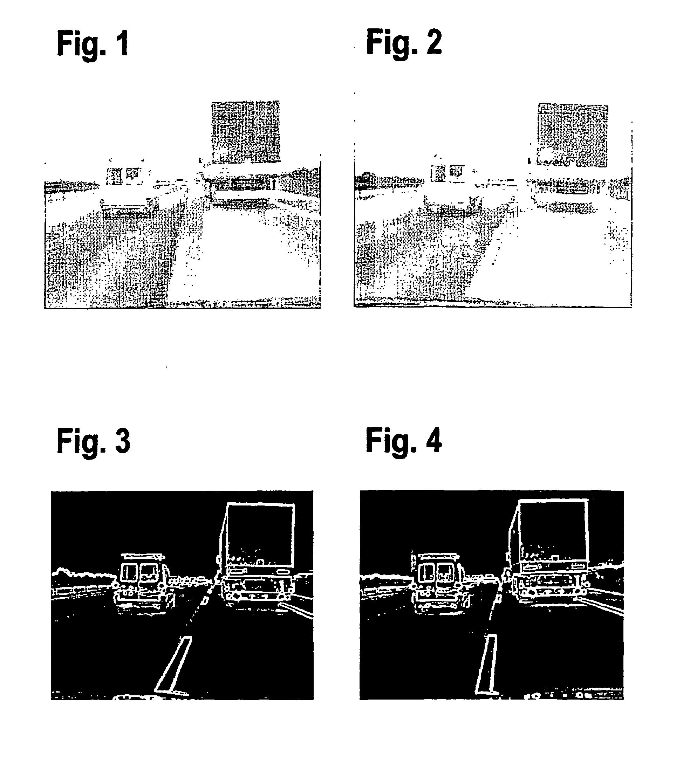

In Figur 1 ist eine fotographische Darstellung eines ersten Bildes gezeigt, das von der erste Videokamera erzeugt wurde und in Figur 2 ist eine fotografische Darstellung eines zweiten Bildes gezeigt, das zum gleichen Zeitpunkt wie das erste Bild von der zweiten Videokamera erzeugt wurde. Das erste und das zweite Bild wird bei dieser Ausführungsform zumindest bis zum Abschluss der Auswertung in digitaler Form gespeichert, im dargestellten Fall in Form von Grauwerten. Sowohl im ersten Bild als auch im zweiten Bild sind neben der Fahrbahn und deren Markierungsstreifen hauptsächlich zwei vorausfahrende Fahrzeuge zu erkennen. Im unteren Bereich des ersten Bildes und des zweiten Bildes sind darüber hinaus die Konturen der Motorhaube des Fahrzeugs zu erkennen, dass das Trägerobjekt bildet.

Der nächste Schritt besteht darin, erste Aufpunkte und erste Winkel von ersten Kanten und ersten Linien in dem ersten Bild und zweite Aufpunkte und zweite Winkel von zweiten Kanten und zweiten Linien in dem zweiten Bild zu erfassen. Zur Durchführung dieses Schrittes existieren verschiedene Möglichkeiten, von denen nachfolgend zwei näher erläutert werden.

Die Figuren 3 bis 6 betreffen eine erste Möglichkeit, um die Aufpunkte und die Winkel zu erfassen. Die Figuren 3 und 4 zeigen das erste Bild von Figur 1 und das zweite Bild von Figur 2 nach der Anwendung eines Kanten- und Linienextraktionsverfahrens, bei dem eine Sobeloperator-Filterung eingesetzt wurde. Ein Vergleich der Figuren 1 und 2 mit den Figuren 3 und 4 zeigt, dass durch das Kanten- und Linienextraktionsverfahren die in dem ersten beziehungsweise dem zweiten Bild enthaltenden Kanten und Linien als helle Linien auf dunklem Hintergrund hervorgehoben werden.

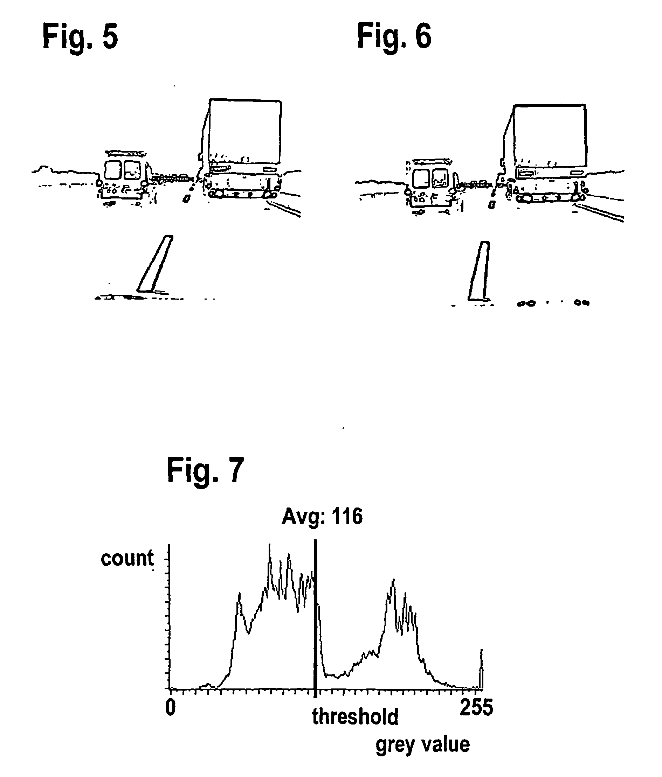

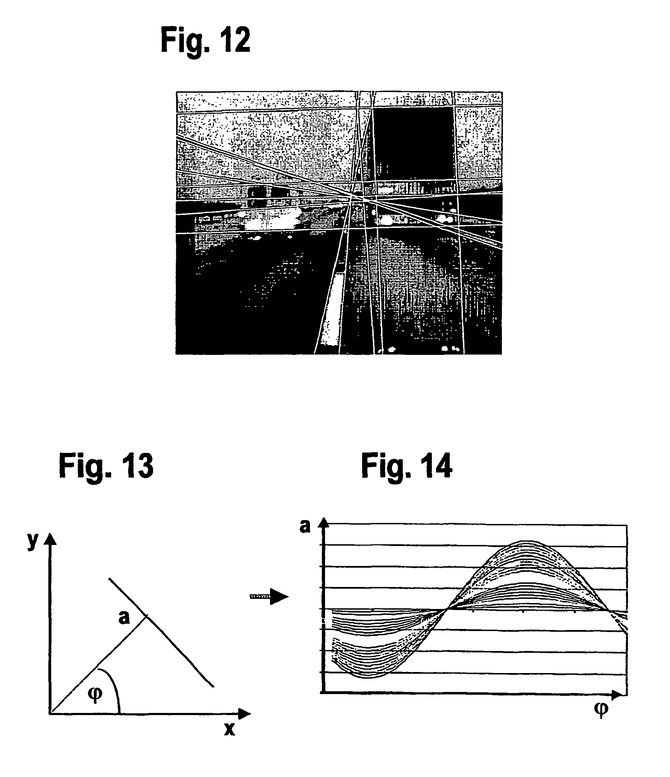

Die Figuren 5 und 6 zeigen die Bilder gemäß den Figuren 3 und 4 nach der Anwendung eines Binearisierungsverfahrens und einer anschließenden Invertierung der Bilder. Als Binearisierungsverfahren wurde im in den Figuren 5 und 6 dargestellten Fall ein Schwellenwertvergleichsverfahren eingesetzt. Wie dies den Figuren 5 und 6 zu entnehmen ist, werden die in dem ersten und zweiten Bild enthaltenen Kanten und Linien als schwarze Kanten und Linien auf weißem Hintergrund abgebildet. Die digitale Form der Bilder gemäß den Figuren 5 und 6 bildet die Grundlage für die Anwendung eines Kanten- und Liniendetektionsverfahrens. Die Kanten- und Liniendetektion erfolgt im dargestellten Fall mit Hilfe der Hough-Transformation. Durch diese Hough-Transformation wird die genaue Position und Lage aller signifikanten Kanten und. Linien in den Bildern bestimmt. Bezogen auf die Darstellungen in den Figuren 13 und 14 werden durch die Hough-Transformation die Kantenpunkte $[x_i, y_i]$ in einen zweidimensionalen Parameterraum $[a, \varphi]$ transformiert, der für die in Figur 13 gezeigte Linie in Figur 14 dargestellt ist. Nach Anwendung der Transformationsgleichung:

$$x_i \cdot \cos(\varphi) + y_i \cdot \sin(\varphi) = a,$$

kann durch eine einfache Suche lokaler Maxima im Parameterraum eine Bestimmung von kolinearen Punkten im zu untersuchenden Bild durchgeführt werden. Das Bestimmen der ersten Aufpunkte und der ersten Winkel sowie der zweiten Aufpunkte und der zweiten Winkel erfolgt durch eine entsprechende Rücktransformation, wodurch man die Aufpunkte und die Winkel der Ursprungslotrechten auf jede signifikante Linie im Ursprungsbild erhält.

Es folgt eine Beschreibung einer zweiten Möglichkeit zur Bestimmung der ersten Winkel und der ersten Aufpunkte beziehungsweise der zweiten Winkel und der zweiten Aufpunkte.

Ausgehend von dem in Figur 1 dargestellten ersten Bild und dem in Figur 2 dargestellten zweiten Bild, ist es ebenfalls möglich, zunächst ein Binearisierungsverfahren mit einer anschließenden Bildinvertierung durchzuführen. Da die zu untersuchenden Bilder systembedingt eine sehr ähnliche Charakteristik aufweisen und ihr Grauwerthistogramm einer bimodalen Verteilung entspricht, kann zur Binearisierung eine einfache Detektion des Minimums zwischen den beiden Maxima eingesetzt werden. Ebenso ist es möglich, Schwellenwertvergleiche durchzuführen, nachdem ein geeigneter Schwellenwert beispielsweise auf den mittleren Grauwert festgelegt wird, wie dies ihn Figur 7 dargestellt ist. Bei der Darstellung gemäß Figur 7 sind auf der x-Achse die unterschiedlichen Grauwerte aufgetragen, die im dargestellten Fall eine Intensität von 0 bis 255 aufweisen können. Auf der y-Achse ist die Häufigkeit aufgetragen, mit der die verschiedenen Grauwerte in den zu untersuchenden Bildern auftreten. Für die Darstellung von Figur 7 liegt der mittlere Grauwert bei einer Intensität von ungefähr 116. Diese Intensität bildet den Schwellenwert S.

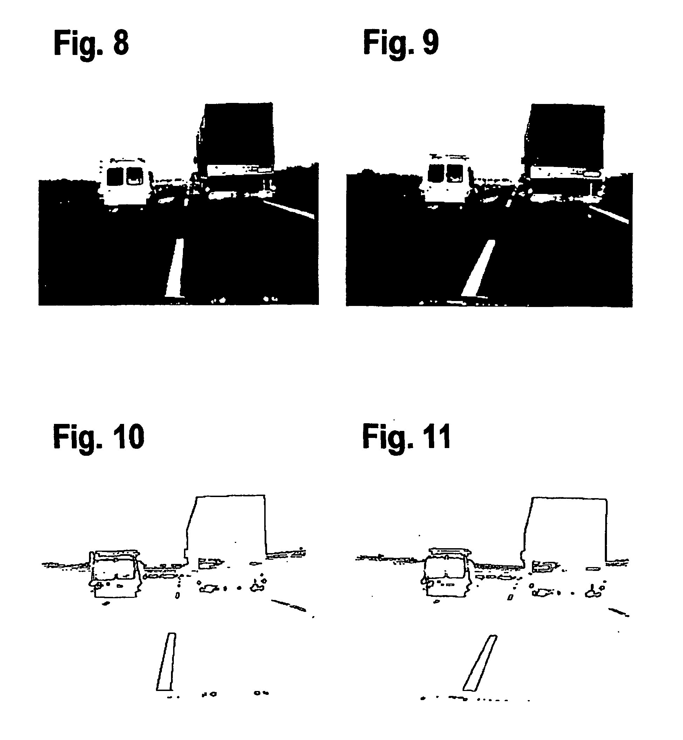

In den Figuren 8 und 9 ist das erste Bild von Figur 1 und das zweite Bild von Figur 2 nach der Anwendung dieses Binearisierungsverfahrens dargestellt. Wie dies den Figuren 8 und 9 zu entnehmen ist, werden ursprünglich hellere Flächen als weiße Flächen abgebildet, während ursprünglich dunklere Flächen als schwarze Flächen abgebildet werden.

In den Figuren 10 und 11 sind die Bilder gemäß den Figuren 8 und 9 nach der Anwendung eines Kanten- und Linienextraktionsverfahrens und einer anschließenden Bildinvertierung dargestellt. Im in den Figuren 10 und 11 dargestellten Fall wurde die Kanten- und Linienextraktion mit Hilfe der Roberts-Edge-Filterung durchgeführt, durch die die in den Bildern gemäß den Figuren 8 und 9 enthaltenen Kanten und Linien als helle Linien auf dunklem Grund abgebildet werden.

Nach der Bildinvertierung kann ein Kanten- und Liniendetektionsverfahren, beispielsweise die bereits erläuterte Hough-Transformation, durchgeführt werden, um die ersten Aufpunkte und die ersten Winkel sowie die zweiten Aufpunkte und die zweiten Winkel zu bestimmen.

Figur 12 zeigt zur Veranschaulichung den ermittelten Verlauf verschiedener Geraden auf Kanten beziehungsweise Linien, die wie vorstehend beschrieben detektiert wurden.

Unabhängig davon, wie die jeweiligen Aufpunkte und Winkel bestimmt wurden, kann nun eine Dejustagebestimmung durch Vergleich von Aufpunkten und Winkeln der in dem ersten Bild und in dem zweiten Bild gefundenen Kanten und Linien durchgeführt werden. Durch Mittelwertbildung aller Verschiebungswerte lässt sich auf eine eventuell abweichende gegenseitige Ausrichtung der beiden Kameras rückschlie-ßen. Dabei lässt sich sowohl eine Veränderung durch Rotation als auch eine Veränderung durch Translation bestimmen. Ein weiterer Vorteil, der sich durch die Mittelung ergibt, besteht darin, dass Messfehler und Messungenauigkeiten, die beispielsweise durch Kamerarauschen verursacht werden können, weitestgehend eliminiert werden. Das Gütemaß der Messung ergibt sich dann über die Standardabweichung der Dejustagewerte.

Die Bestimmung von Korrekturparametern aus den ersten Aufpunkten und den ersten Winkeln sowie den zweiten Aufpunkten und den zweiten Winkeln kann durch Bestimmen der relativen Koordinaten zwischen beiden Kameras erfolgen. Diese neuen, relativen Koordinaten werden vorzugsweise abgespeichert. Weichen die neu errechneten Differenzwerte, beziehungsweise die Mittelungen über mehrere Messungen, von den zuvor gespeicherten Werten ab, so können die neu errechneten Werte als neue Referenzwerte abgespeichert werden.

den.

Vorstehend wurde anhand der Figuren eine Ausführungsform des Verfahrens, das beispielsweise durch die Vorrichtung durchgeführt werden kann, erläutert, bei der eine eventuelle gegenseitige Dejustage von zwei Bilderzeugungsvorrichtungen erkannt und gegebenenfalls kompensiert wird.

Die vorliegenden Erfindung ist jedoch dazu geeignet, eine eventuelle Dejustage einer Bilderzeugungsvorrichtung bezüglich dem Trägerobjekt, beispielsweise einem Fahrzeug, zu erkennen und gegebenenfalls zu kompensieren. In diesem Fall wird sowohl das erste als auch das zweite Bild von ein und derselben Bilderzeugungsvorrichtung erzeugt, aber zu unterschiedlichen Zeitpunkten. Bezüglich dem Wortlaut der zugehörigen Ansprüche ist das zweite Bild in diesem Fall das ältere Bild, das als Referenzbild verwendet wird. Da sich das erste und das zweite Bild in diesem Fall mit hoher Wahrscheinlichkeit stark voneinander unterscheiden, müssen in diesem Fall sowohl das erste Bild als auch das zweite Bild Kanten und Linien des Trägerobjekts umfassen, die in jedem Fall Bestandteil der Bilder sind. Wenn das Trägerobjekt beispielsweise durch ein Fahrzeug gebildet ist, können diese Kanten und Linien des Trägerobjekts beispielsweise Kanten und Linien der Motorhaube sein, die sich immer im unteren Bereich des Bildes abzeichnen, wie dies beispielsweise auch in den Bildern der Figuren 1 und 2 zu erkennen ist. In einigen Fällen, kann es diesbezüglich vorteilhaft sein, wenn anstelle von Geradengleichungen zur Transformation eine Gleichung oder ein Parametersatz für die Kontur der Motorhaube eingesetzt werden. Vom Prinzip her läuft das erfindungsgemäße Verfahren bei der Kompensation einer Dejustage einer Bilderzeugungsvorrichtung bezüglich einem Trägerobjekt genauso ab, wie bei der Kompensation einer gegenseitigen Dejustage von zwei Bilderzeugungsvorrichtungen, die ausführlich erläutert wurde. Um Speicherplatz zu sparen oder aus anderen Gründen, kann es bezüglich dem zweiten, älteren Bild in einigen Fällen vorteilhaft sein, nur die Aufpunkte und die Winkel der Kanten beziehungsweise Linien des Trägerobjekts zu speichern, die für die spätere Dejustageüberwachung verwendet werden.

Sofern zwei Bilderzeugungsvorrichtungen vorgesehen sind, kann es vorteilhaft sein, wenn zunächst eine eventuelle Dejustage, einer Bilderzeugungsvorrichtung bezüglich dem Trägerobjekt kompensiert.wird, und wenn anschließend eine eventuelle gegenseitige Dejustage der Bilderzeugungsvorrichtungen über die andere Bilderzeugungsvorrichtung kompensiert wird.

Wenn das Trägerobjekt durch ein Fahrzeug gebildet ist, kann die Dejustage-Erkennung und -Kompensation während des regulären Betriebs des Fahrzeugs durchgeführt werden, das heißt, es ist kein Serviceaufenthalt in einer Werkstatt oder in einer anderen speziellen Test-/Kalibierungsumgebung erforderlich. Die Kompensation kann ohne Veränderungen an den Bilderzeugungsvorrichtungen oder den übrigen System durchgeführt werden. Durch eine fortlaufende Überprüfung auf eine eventuelle Dejustage lassen sich in einfacher Weise Daten extrahieren, die bei einer zu großen Dejustage dazu führen, dass das System abgeschaltet wird. Insgesamt ist das Verfahren robust gegen Fehlmessungen, da sowohl innerhalb einer Messung ein Gütemaß extrahiert werden kann, beispielsweise die Standardabweichung von Verschiebungen und/oder Verdrehungen, als auch über den gesamten Überwachungszeitraum, beispielsweise über den Verlauf der Kamerapositionen. Die erfindungsgemäße Vorrichtung kann in vorteilhafter Weise zur Durchführung des erfindungsgemäßen Verfahrens verwendet werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung wie durch due Ansprüche definiert zu verlassen.

**Patentansprüche**

1. Verfahren zum Kompensieren einer Dejustage von zumindest einer ersten Bilderzeugungsvorrichtung, die an einem Trägerobjekt, insbesondere einem Fahrzeug, angeordnet ist, bezüglich des Trägerobjektes, wobei das Verfahren die folgenden Schritte umfasst:

   a) Erzeugen eines ersten Bildes mit der ersten Bilderzeugungsvorrichtung und Speichern des ersten Bildes,
   b) Bestimmen einer Position und Lage von ersten Kanten und/oder ersten Linien in dem ersten Bild durch Erfassen von ersten Aufpunkten und ersten Winkeln der Ursprungslotrechten auf die ersten Kanten und/oder ersten Linien in dem ersten Bild,
   c) Vergleichen der ersten Aufpunkte und der ersten Winkel mit zweiten Aufpunkten und zweiten Winkeln von zweiten Kanten und/oder zweiten Linien in einem zweiten Bild, um zu beurteilen, ob eine Dejustage der ersten Bilderzeugungsvorrichtung vorliegt, wobei das zweite Bild ein zu einem früheren Zeitpunkt von der ersten Bilderzeugungsvorrichtung erzeugtes Bild ist, und wobei die ersten Kanten und/oder die ersten Linien und die zweiten Kanten und/oder die zweiten Linien Kanten und/oder Linien des Trägerobjektes umfassen, und
   d) Bestimmen von Korrekturparametern aus den ersten Aufpunkten und den ersten Winkeln und den zweiten Aufpunkten und den zweiten Winkeln, falls eine Dejustage der ersten Bilderzeugungsvorrichtung vorliegt, um mit Hilfe der Korrekturparameter gegebenenfalls die Dejustage zu kompensieren.

2. Verfahren nach Anspruch 1, **dadurch gekennzeichnet, dass** Schritt b) die folgenden Teilschritte in der genannten Reihenfolge umfasst:

   - Anwenden eines Kanten- und/oder Linienextraktionsverfahrens,
   - Anwenden eines Binearisierungsverfahrens,
   - Durchführen einer Bildinvertierung,
   - Anwenden eines Kanten- und/oder Liniendetektionsverfahrens, und
   - Bestimmen der ersten Aufpunkte und der ersten Winkel.

3. Verfahren nach Anspruch 1, **dadurch gekennzeichnet, dass** Schritt b) die folgenden Teilschritte in der genannten Reihenfolge umfasst:

   - Anwenden eines Binearisierungsverfahrens,
   - Anwenden eines Kanten- und/oder Linienextraktionsverfahrens,
   - Durchführen einer Invertierung,
   - Anwenden eines Kanten- und/oder Liniendetektionsverfahrens, und
   - Bestimmen der ersten Aufpunkte und der ersten Winkel.

4. Verfahren nach einem der vorhergehenden Ansprüche, **dadurch gekennzeichnet, dass** die zweiten Aufpunkte und die zweiten Winkel zweite Kanten und/oder zweite Linien festlegen, die in dem zweiten Bild gefunden werden.

5. Verfahren nach einem der vorhergehenden. Ansprüche, **dadurch gekennzeichnet, dass** die zweiten Aufpunkte und die zweiten Winkel wie die ersten Aufpunkte und/oder die ersten Winkel bestimmt werden.

6. Verfahren nach einem der vorhergehenden Ansprüche, **dadurch gekennzeichnet, dass** bei Schritt d) auch dann Korrekturparameter aus den ersten Aufpunkten und den ersten Winkeln und den zweiten Aufpunkten und den zweiten Winkeln bestimmt werden, wenn eine Dejustage einer zweiten Bilderzeugungsvorrichtung vorliegt, um diese Dejustage mit Hilfe der Korrekturparameter gegebenenfalls zu kompensieren.

7. Verfahren nach einem der vorhergehenden Ansprüche, **dadurch gekennzeichnet, dass** die erste Bilderzeugungsvorrichtung durch eine Videokamera gebildet wird.

8. Verfahren nach einem der vorhergehenden Ansprüche, **dadurch gekennzeichnet, dass** bei dem Kanten- und/oder Linienextraktionsverfahren eine Sobeloperator-Filterung eingesetzt wird.

**9.** Verfahren nach einem der vorhergehenden Ansprüche, **dadurch gekennzeichnet, dass** bei dem Kanten- und/oder Linienextraktionsverfahren eine Roberts-Edge-Filterung eingesetzt wird.

**10.** Verfahren nach einem der vorhergehenden Ansprüche, **dadurch gekennzeichnet, dass** bei dem Binearisierungsverfahren ein Schwellenwertverfahren eingesetzt wird.

**11.** Verfahren nach einem der vorhergehenden Ansprüche, **dadurch gekennzeichnet, dass** bei dem Binearisierungsverfahren, bezüglich einem Grauwerthistogramm des ersten Bildes und des zweiten Bildes, die Minima zwischen zwei jeweiligen Maxima erfasst werden.

**12.** Verfahren nach einem der vorhergehenden Ansprüche, **dadurch gekennzeichnet, dass** bei dem Kanten- und/oder Liniendetektionsverfahren eine Hough-Transformation eingesetzt wird.

**13.** Kompensationsvorrichtung zum Kompensieren einer Dejustage von zumindest einer ersten Bilderzeugungsvorrichtung, die an einem ersten Trägerobjekt, insbesondere einem Fahrzeug, angeordnet ist, bezüglich des Trägerobjektes, wobei die Kompensationsvorrichtung aufweist:

- Aufpunkt- und Winkelerfassungsmittel zum Bestimmen von Position und Lage von ersten Kanten und/oder ersten Linien in einem ersten Bild durch Erfassen von ersten Aufpunkten und ersten Winkeln der Ursprungslotrechten auf die ersten Kanten und oder ersten Linien in dem ersten Bild, das von der ersten Bilderzeugungsvorrichtung erzeugt wurde,
- Vergleichsmittel zum Vergleichen der ersten Aufpunkte und der ersten Winkel mit zweiten Aufpunkten und zweiten Winkeln in einem zweiten Bild, um zu beurteilen, ob eine Dejustage der ersten Bilderzeugungsvorrichtung vorliegt, wobei das zweite Bild ein zu einem früheren Zeitpunkt von der ersten Bilderzeugungsvorrichtung erzeugtes Bild ist, und wobei die ersten Kanten und/oder die ersten Linien und die zweiten Kanten und/oder die zweiten Linien Kanten und/oder Linien des Trägerobjektes umfassen, und
- Korrekturparameterbestimmungsmittel zum Bestimmen von Korrekturparametern aus den ersten Aufpunkten und den ersten Winkeln und den zweiten Aufpunkten und den zweiten Winkeln, falls eine Dejustage der ersten Bilderzeugungsvorrichtung vorliegt, um mit Hilfe der Korrekturparameter gegebenenfalls die Dejustage zu kompensieren.

**14.** Vorrichtung nach Anspruch 13, **dadurch gekennzeichnet, dass** die Aufpunkt- und Winkelerfassungsmittel Kanten- und/oder Linienextraktionsmittel, Binearisierungsmittel und Invertierungsmittel aufweisen.

**15.** Vorrichtung nach einem der Ansprüche 13 bis 14, **dadurch gekennzeichnet, dass** die zweiten Aufpunkte und die zweiten Winkel zweite Kanten und/oder zweite Linien festlegen, die in dem zweiten Bild gefunden werden.

**16.** Vorrichtung nach einem der Ansprüche 13 bis 15, **dadurch gekennzeichnet, dass** die zweiten Aufpunkte und die zweiten Winkel nach dem gleichen Prinzip wie die ersten Aufpunkte und die ersten Winkel bestimmt werden.

**17.** Vorrichtung nach einem der Ansprüche 13 bis 16, **dadurch gekennzeichnet, dass** die Korrekturparameterbestimmungsmittel aus den ersten Aufpunkten und den ersten Winkeln und den zweiten Aufpunkten und den zweiten Winkeln auch dann Korrekturparameter bestimmen, wenn eine Dejustage einer zweiten Bilderzeugungsvorrichtung vorliegt, um diese Dejustage mit Hilfe der Korrekturparameter gegebenenfalls zu kompensieren.

**18.** Vorrichtung nach einem der Ansprüche 13 bis 17, **dadurch gekennzeichnet, dass** die erste Bilderzeugungsvorrichtung durch eine Videokamera gebildet wird.

**19.** Vorrichtung nach einem der Ansprüche 13 bis 18, **dadurch gekennzeichnet, dass** das zweite Bild ein zu einem früheren Zeitpunkt von der ersten Bilderzeugungsvorrichtung erzeugtes Bild ist, und dass die zweiten Kanten und/oder die zweiten Linien Kanten und/oder Linien des Trägerobjekts umfassen.

**20.** Vorrichtung nach einem der Ansprüche 13 bis 19, **dadurch gekennzeichnet, dass** die Kanten- und/oder Linienextraktionsmittel eine Sobeloperator-Filterung durchführen.

**21.** Vorrichtung nach einem der Ansprüche 13 bis 20, **dadurch gekennzeichnet, dass** die Kanten- und/oder Linienextraktionsmittel eine Roberts-Edge-Filterung durchführen.

**22.** Vorrichtung nach einem der Ansprüche 13 bis 21, **dadurch gekennzeichnet, dass** die Binearisierungsmittel Schwellenwertvergleiche durchführen.

**23.** Vorrichtung nach einem der Ansprüche 13 bis 22, **dadurch gekennzeichnet, dass** die Binearisierungsmittel, bezüglich einem Grauwerthistogramm des ersten Bildes und des zweiten Bildes, die Minima zwischen zwei jeweiligen Maxima erfassen.

24. Vorrichtung nach einem der Ansprüche 13 bis 23, **dadurch gekennzeichnet, dass** die Kanten- und/ oder Liniendetektionsmittel eine Hough-Transformation durchführen.

**Claims**

1. Method for compensating for a maladjustment of at least one first image-producing device, which is arranged on a carrier object, in particular a vehicle, with reference to the carrier object, the method comprising the following steps:

   a) producing a first image with the aid of the first image-producing device, and storing the first image,

   b) determining a position of first edges and/or first lines in the first image by detecting first reference points and first angles of the original perpendicular to the first edges and/or first lines in the first image,

   c) comparing the first reference points and the first angles with second reference points and second angles of second edges and/or second lines in a second image, in order to judge whether a maladjustment of the first image-producing device obtains, the second image being an image produced at an earlier instant by the first image-producing device, and the first edges and/or the first lines and the second edges and/or the second lines comprising edges and/or lines of the carrier object, and

   d) determining correction parameters from the first reference points and the first angles, and from the second reference points and the second angles, if a maladjustment of the first image-producing device obtains, in order if appropriate to compensate for the maladjustment with the aid of the correction parameters.

2. Method according to Claim 1, **characterized in that** step b) comprises the following substeps in the said sequence:

   - applying an edge and/or line extraction method,
   - applying a binarization method,
   - carrying out an image inversion,
   - applying an edge and/or line detection method, and
   - determining the first reference points and the first angles.

3. Method according to Claim 1, **characterized in that** step b) comprises the following substeps in the said sequence:

   - applying a binarization method,
   - applying an edge and/or line extraction method,
   - carrying out an inversion,
   - applying an edge and/or line detection method, and
   - determining the first reference points and the first angles.

4. Method according to one of the preceding claims, **characterized in that** the second reference points and the second angles define second edges and/or second lines which are found in the second image.

5. Method according to one of the preceding claims, **characterized in that** the second reference points and the second angles are determined like the first reference points and/or the first angles.

6. Method according to one of the preceding claims, **characterized in that** in step d) correction parameters are determined from the first reference points and the first angles and the second reference points and the second angles even when a maladjustment of a second image-producing device obtains, in order if appropriate to compensate for this maladjustment with the aid of the correction parameters.

7. Method according to one of the preceding claims, **characterized in that** the first image-producing device is formed by a video camera.

8. Method according to one of the preceding claims, **characterized in that** Sobel operator filtering is used in the edge and/or line extraction method.

9. Method according to one of the preceding claims, **characterized in that** Roberts edge filtering is used in the edge and/or line extraction method.

10. Method according to one of the preceding claims, **characterized in that** a threshold value method is used in the binarization method.

11. Method according to one of the preceding claims, **characterized in that** in the binarization method the minima between two respective maxima are detected with reference to a grey-scale value histogram of the first image and of the second image.

12. Method according to one of the preceding claims, **characterized in that** a Hough transformation is used in the edge and/or line detection method(s).

13. Compensation device for compensating for a maladjustment of at least one first image-producing device which is arranged on a first carrier object, in particular a vehicle, with reference to the carrier object, the compensation device comprising:

- means for detecting reference points and angles in order to determine the position of first edges and/or first lines in a first image by detecting first reference points and first angles of the original perpendicular to the first edges and/or first lines in the first image that has been produced by the first image-producing device,
- comparison means for comparing the first reference points and the first angles with second reference points and second angles in a second image, in order to judge whether a maladjustment of the first image-producing device obtains, the second image being an image produced at an earlier instant by the first image-producing device, and the first edges and/or the first lines and the second edges and/or the second lines comprising edges and/or lines of the carrier object, and
- means for determining correction parameters in order to determine correction parameters from the first reference points and the first angles, and from the second reference points and the second angles, if a maladjustment of the first image-producing device obtains, in order if appropriate to compensate for the maladjustment with the aid of the correction parameters.

14. Device according to Claim 13, **characterized in that** the means for detecting reference points and angles have means for extracting edges and/or lines, binarization means and inversion means.

15. Device according to one of Claims 13 to 14, **characterized in that** the second reference points and the second angles define second edges and/or second lines which are found in the second image.

16. Device according to one of Claims 13 to 15, **characterized in that** the second reference points and the second angles are determined using the same principle as the first reference points and the first angles.

17. Device according to one of Claims 13 to 16, **characterized in that** the means for determining correction parameters determine correction parameters from the first reference points and the first angles and the second reference points and the second angles even when a maladjustment of a second image-producing device obtains, in order if appropriate to compensate for this maladjustment with the aid of the correction parameters.

18. Device according to one of Claims 13 to 17, **char-**

**acterized in that** the first image-producing device is formed by a video camera.

19. Device according to one of Claims 13 to 18, **characterized in that** the second image is an image produced at an earlier instant by the first image-producing device, and **in that** the second edges and/or the second lines comprise edges and/or lines of the carrier object.

20. Device according to one of Claims 13 to 19, **characterized in that** the edge and/or line extraction means carry out Sobel operator filtering.

21. Device according to one of Claims 13 to 20, **characterized in that** the edge and/or line extraction means carry out Roberts edge filtering.

22. Device according to one of Claims 13 to 21, **characterized in that** the binarization means carry out threshold value comparisons.

23. Device according to one of Claims 13 to 22, **characterized in that** in the binarization means detect the minima between two respective maxima with reference to a grey-scale value histogram of the first image and of the second image.

24. Device according to one of Claims 13 to 23, **characterized in that** the edge and/or line detection means carry out a Hough transformation.


**Revendications**

1. Procédé pour compenser un défaut d'alignement d'au moins un premier dispositif de formation d'image installé sur un objet support notamment un véhicule par rapport à l'objet support, procédé comprenant les étapes suivantes dans lesquelles :

a) on génère une première image à l'aide du premier générateur d'image et on l'enregistre en mémoire,
b) on définit une position et une situation des premières arêtes et/ou des premières lignes dans la première image en saisissant des premiers repères et des premiers angles des verticales d'origine sur les premières arêtes et/ou les premières lignes dans la première image,
c) on compare les premiers repères et les premiers angles à des seconds repères et des seconds angles de secondes arêtes et/ou de secondes lignes dans une seconde image pour juger s'il y a un défaut d'alignement du premier générateur d'image, la seconde image étant une image générée antérieurement par le premier générateur d'image et les premières arêtes et/ou les premières lignes et les secondes arêtes et/ou les secondes lignes comprennent les arêtes et/ou les lignes de l'objet de support, et
d) on détermine les paramètres de correction à partir des premiers repères et des premiers angles ainsi que des seconds repères et des seconds angles s'il y a un défaut d'alignement du premier dispositif générateur d'image, pour compenser d'éventuels défauts d'alignement à l'aide des paramètres de correction.

2. Procédé selon la revendication 1,
   **caractérisé en ce que**
   l'étape b) comprend les sous étapes suivantes dans l'ordre indiqué selon lesquelles :

   - on applique un procédé d'extraction d'arêtes et/ou de lignes,
   - on applique un procédé de numérisation,
   - on effectue une inversion d'image,
   - on applique un procédé de détection d'arêtes et/ou de lignes, et
   - on détermine les premiers repères et les premiers angles.

3. Procédé selon la revendication 1,
   **caractérisé en ce que**
   l'étape b) se compose des sous étapes suivantes dans l'ordre indiqué selon lesquelles :

   - on applique un procédé de numérisation,
   - on applique un procédé d'extraction d'arêtes et/ou de lignes,
   - on effectue une inversion,
   - on applique un procédé de détection d'arêtes et/ou de lignes, et
   - on détermine les premiers repères et les premiers angles.

4. Procédé selon l'une quelconque des revendications précédentes,
   **caractérisé en ce qu'**
   on fixe les seconds repères et les seconds angles des secondes arêtes et/ou des secondes lignes que l'on a trouvées dans la seconde image.

5. Procédé selon l'une quelconque des revendications précédentes,
   **caractérisé en ce qu'**
   on détermine les seconds repères et les seconds angles comme les premiers repères et/ou les premiers angles.

6. Procédé selon l'une quelconque des revendications précédentes,
   **caractérisé en ce que**
   dans l'étape d) on peut également déterminer les paramètres de correction à partir des premiers repères et des premiers angles et des seconds repères et des seconds angles s'il y a un défaut d'alignement d'un second générateur d'image pour compenser cet éventuel défaut d'alignement à l'aide des paramètres de correction.

7. Procédé selon l'une quelconque des revendications précédentes,
   **caractérisé en ce que**
   le premier générateur d'image est une caméra vidéo.

8. Procédé selon l'une quelconque des revendications précédentes,
   **caractérisé en ce que**
   le procédé d'extraction des arêtes et/ou des lignes est un filtrage avec un opérateur Sobel.

9. Procédé selon l'une quelconque des revendications précédentes,
   **caractérisé en ce que**
   le procédé d'extraction des arêtes et/ou des lignes utilise un filtrage d'arêtes Roberts.

10. Procédé selon l'une quelconque des revendications précédentes,
    **caractérisé en ce que**
    le procédé de numérisation utilise un procédé à seuil.

11. Procédé selon l'une quelconque des revendications précédentes,
    **caractérisé en ce que**
    le procédé de numérisation saisit les minima entre chaque fois deux maxima pour l'histogramme des gris de la première et de la seconde image.

12. Procédé selon l'une quelconque des revendications précédentes,
    **caractérisé en ce que**
    le procédé de détection d'arêtes et/ou de lignes utilise une transformation Hough.

13. Dispositif de compensation pour compenser un défaut d'alignement d'au moins un premier générateur d'image installé sur un premier objet support notamment un véhicule vis-à-vis de l'objet support, ce dispositif comprenant les moyens suivants :

    - des moyens de saisie de repères et d'angles pour déterminer la position et la situation des premières arêtes et/ou des premières lignes d'une première image par la saisie des premiers repères et des premiers angles des verticales d'origine sur les premières arêtes et/ou les premières lignes dans la première image générée par le premier générateur d'image,
    - des moyens pour comparer les premiers repères et les premiers angles aux seconds repères et seconds angles dans une seconde image pour juger s'il y a un défaut d'alignement du premier générateur d'image, la seconde image étant une image antérieure formée par le premier générateur d'image et les premières arêtes et/ou les premières lignes ainsi que les secondes arêtes et/ou les secondes lignes comportent des arêtes et/ou des lignes de l'objet de support, et

- des moyens pour déterminer les paramètres de correction pour définir des paramètres de correction à partir des premiers repères et des premiers angles ainsi que des seconds repères et des seconds angles s'il y a un défaut d'alignement pour le premier générateur d'image, pour compenser le défaut d'alignement éventuel à l'aide des paramètres de correction.

14. Dispositif selon la revendication 13,
**caractérisé en ce que**
les moyens de saisie des repères et des angles comportent des moyens d'extraction d'arêtes et/ou de lignes, des moyens de numérisation et des moyens d'inversion.

15. Dispositif selon l'une quelconque des revendications 13 à 14,
**caractérisé en ce que**
les seconds repères et les seconds angles fixent les secondes arêtes et/ou les secondes lignes trouvées dans la seconde image.

16. Dispositif selon l'une quelconque des revendications 13 à 15,
**caractérisé en ce que**
les seconds repères et les seconds angles sont définis selon le même principe que les premiers repères et les premiers angles.

17. Dispositif selon l'une quelconque des revendications 13 à 16,
**caractérisé en ce que**
les moyens de détermination des paramètres de correction utilisent les premiers repères et les premiers angles ainsi que les seconds repères et les seconds angles pour définir également des paramètres de correction s'il y a un défaut d'alignement d'un second générateur d'image pour compenser les défauts d'alignement éventuels à l'aide des paramètres de compensation.

18. Dispositif selon l'une quelconque des revendications 13 à 17,
**caractérisé en ce que**
le premier générateur d'image est une caméra vidéo.

19. Dispositif selon l'une quelconque des revendications 13 à 18,
**caractérisé en ce que**

la seconde image est une image générée à un instant antérieur par le premier dispositif générateur d'image et la seconde arête et/ou les secondes lignes d'arêtes et/ou lignes sont les arêtes et/ou les lignes de l'objet support.

20. Dispositif selon l'une quelconque des revendications 13 à 19,
**caractérisé en ce que**
les moyens d'extraction des arêtes et/ou des lignes effectuent un filtrage avec un opérateur Sobel.

21. Dispositif selon l'une quelconque des revendications 13 à 20,
**caractérisé en ce que**
les moyens d'extraction des arêtes et/ou des lignes effectuent un filtrage d'arêtes Roberts.

22. Dispositif selon l'une quelconque des revendications 13 à 21,
**caractérisé en ce que**
les moyens de numérisation effectuent des comparaisons de valeurs de seuil.

23. Dispositif selon l'une quelconque des revendications 13 à 22,
**caractérisé en ce que**
les moyens de numérisation saisissent les minima entre deux maxima respectifs pour l'histogramme des gris de la première image et de la seconde image.

24. Dispositif selon l'une quelconque des revendications 13 à 23,
**caractérisé en ce que**
les moyens de détection d'arêtes et/ou de lignes effectuent une transformation Hough.

# Fig. 1

# Fig. 2

# Fig. 3

# Fig. 4

# Fig. 5

# Fig. 6

# Fig. 7

Avg: 116

count

threshold

0                                    255

grey value

**Fig. 8**

**Fig. 9**

**Fig. 10**

**Fig. 11**

**Fig. 12**

**Fig. 13**

**Fig. 14**